# EUROPÄISCHE PATENTSCHRIFT

(11) **EP 2 795 274 B1**
(45) Veröffentlichungstag und Bekanntmachung des Hinweises auf die Patenterteilung: **23.09.2015**
(21) Anmeldenummer: 12816048.8
(22) Anmeldetag: 18.12.2012
(51) Int. Cl.: G01J 5/34, G01N 21/35

(54) **INFRAROTLICHTSENSORCHIP MIT HOHER MESSGENAUIGKEIT UND VERFAHREN ZUM HERSTELLEN DES INFRAROTLICHTSENSORCHIPS**
INFRARED LIGHT SENSOR CHIP WITH HIGH MEASUREMENT ACCURACY AND METHOD FOR PRODUCING THE INFRARED LIGHT SENSOR CHIP
PUCE DE CAPTEUR DE LUMIÈRE INFRAROUGE À PRÉCISION DE MESURE ÉLEVÉE ET PROCÉDÉ DE FABRICATION DE LA PUCE DE CAPTEUR DE LUMIÈRE INFRAROUGE

(30) Priorität: 19.12.2011 DE 102011056610
(43) Veröffentlichungstag der Anmeldung: 29.10.2014
(73) Patentinhaber: Pyreos Ltd., Edinburgh EH9 3JF (GB)
(72) Erfinder: GIEBELER, Carsten, Edinburgh EH 32 0PE (GB)
(74) Vertreter: PATERIS Patentanwälte PartmbB
(86) Internationale Anmeldenummer: PCT/EP2012/075928
(87) Internationale Veröffentlichungsnummer: WO 2013/092571

(56) Entgegenhaltungen:
- DE-A1- 19 525 071
- DE-A1-102009 027 733
- JP-A- 2009 058 463
- US-A1- 2011 049 369

## Beschreibung

Die Erfindung betrifft einen Infrarotlichtsensorchip mit hoher Messgenauigkeit und ein Verfahren zum Herstellen des Infrarotlichtsensorchips.

Zum Detektieren von Gas ist es bekannt Infrarotlicht zu verwenden, das in einem Wellenlängenbereich von 3 bis 5 µm liegt. Mit einer Lichtquelle, die geeignet ist, das Infrarotlicht in diesem Wellenlängenbereich zu emittieren, wird das zu detektierende Gas bestrahlt, wobei ein Anteil des Infrarotlichts von dem Gas absorbiert wird, so dass ein Restlicht verbleibt. Das Restlicht kann mit einem Infrarotlichtsensor gemessen werden, mit dem der Wellenlängenbereich und/oder die Intensität des Restlichts erfassbar und entsprechend in ein elektrisches Signal umwandelbar ist. Auf Basis des elektrischen Signals kann bei einer geeigneten Auswertung auf die Art und den Gehalt des detektierten Gases geschlossen werden.

Der Infrarotlichtdetektorchip weist herkömmlich eine Schicht mit pyroelktrisch sensitivem Material auf, das beispielsweise Blei-Zirkonat-Titanat (PZT) ist. Die Schicht ist herkömmlich auf eine Trägermembran aufgebracht, die herkömmlich aus Silizium hergestellt ist. Ferner ist die Schicht mit Elektroden elektronisch verschaltet, die beispielsweise aus Platin oder einer die Infrarotlichtstrahlung absorbierende Chrom-NickelLegierung hergestellt sind.

Der Infrarotlichtsensorchip ist beispielsweise in einen nichtdispersiven Infrarotlicht-Absorptionsanalysator (NDIR) eingesetzt, der zum Messen von Gaskonzentrationen verwendbar ist. Das Ausgangssignal des Infrarotlichtsensorchips, das einer Messung einer Gaskonzentration zugrunde liegt, ist stark abhängig von der Temperatur, die der Infrarotlichsensorchip bei der der Messung hat, so dass die Messgenauigkeit des nichtdispersiven Infrarot-Absorptionsanalysators von der genauen Kenntnis der Temperatur des Infrarotlichtsensorchips abhängt.

Der Infrarotlichtsensorchip weist ein Gehäuse auf, in dem die Trägermembran mit der pyroelektrisch sensitiven Schicht und den Elektroden zum Schutz vor schädlichen Umwelteinflüssen eingehaust ist. Zum Schließen auf die Temperatur des Infrarotlichtsensorchips während der Messung ist in dem nichtdispersiven Infrarot-Absorptionsanalysator zusätzlich ein Temperatursensor vorgesehen, mit dem aktuell die Temperatur der Umgebung des Infrarotlichtsensorchips messbar ist. Dadurch, dass das Gehäuse des Infrarotlichtsensorchips aus Platzgründen möglichst klein gestaltet ist, ist der Temperatursensor außerhalb des Gehäuses angeordnet. Ist der Temperatursensor an dem Gehäuse angebaut, wird mit dem Temperatursensor die Temperatur des Gehäuses gemessen. Alternativ hierzu ist der Temperatursensor in unmittelbarer Nachbarschaft zum Gehäuse angeordnet, so dass mit dem Temperatursensor die Umgebungstemperatur des Gehäuses gemessen wird. Insbesondere bei mit der Zeit sich verändernden Umgebungstemperaturen tritt im Allgemeinen der Fall ein, dass die von dem Temperatursensor gemessene Temperatur nicht mit der Temperatur der pyroelektrisch sensitiven Schicht übereinstimmt, woraus sich Messungenauigkeiten für den Infrarotlichtsensorchip ergeben.

US 2011/0049369 A1 beschreibt eine Vorrichtung zum Detektieren von thermischer Strahlung. DE 195 25 071 A1 beschreibt ein pyroelektrisches Bauelement und ein Verfahren zum Herstellen eines pyroelektrischen Bauelements. JP 2009 058463 A beschreibt eine Vorrichtung zum Erkennen eines menschlichen Körpers. DE 10 2009 027733 A offenbart ein Sensorsubstrat mit einem Temperatursensor.

Aufgabe der Erfindung ist es einen Infrarotlichtsensorchip und ein Verfahren zum Herstellen des Infrarotlichtsensorchips zu schaffen, wobei der Infrarotlichtsensorchip eine hohe Messgenauigkeit hat.

Die Aufgabe wird gelöst mit den Merkmalen der Patentansprüche 1 und 12. Bevorzugte Ausgestaltungen dazu sind in den weiteren Patentansprüchen angegeben.

Der erfindungsgemäße Infrarotlichtsensorchip weist ein Substrat, einen Infrarotlichtsensor, der eine Basiselektrode aufweist, die an einer Seite des Substrats unmittelbar anliegt und mittels der der Infrarotlichtsensor an dem Substrat befestigt ist, und ein Widerstandsthermometer auf, das eine Widerstandsbahn aufweist, die unmittelbar an der Seite des Substrats neben dem Infrarotlichtsensor anliegt und für eine Messung der Temperatur des Substrats durch das Widerstandsthermometer eingerichtet ist, wobei die Widerstandsbahn aus dem Material der Basiselektrode hergestellt ist. Das erfindungsgemäße Verfahren zum Herstellen des Infrarotlichtsensorchips weist die Schritte auf: Bereitstellen des Substrats; Beschichten des Substrats an der Seite mit dem Basiselektrodenmaterial, so dass die Seite von einer Basiselektrodenmaterialschicht bedeckt wird; Entfernen von überschüssigem Material der Basiselektrodenschicht, so dass die Basiselektrode und die Widerstandsbahn an der Seite des Substrats ausgebildet werden; Fertigstellen des Infrarotlichtsensors.

Herkömmlich ist der Infrarotlichtsensorchip in einem Gehäuse eingehaust, um den Infrarotlichtsensorchip vor möglicherweise schädlichen Umwelteinflüssen zu schützen. Erstrebenswert ist es, das Gehäuse möglichst klein auszuführen, so dass der Platzbedarf des Infrarotlichtsensorchips gering ist. Da ein herkömmlicher Temperatursensor für einen herkömmlichen Infrarotlichtsensorchip nicht in das Gehäuse passt, ist der herkömmliche Temperatursensor außerhalb des Gehäuses angeordnet. Hingegen weist der erfindungsgemäße Infrarotlichtsensorchip das Widerstandsthermometer auf, das mit seiner Widerstandsbahn unmittelbar auf der Oberfläche des Substrats neben dem Infrarotlichtsensor angeordnet ist, so dass das Widerstandsthermometer innerhalb eines für den Infrarotlichtsensorchip vorgesehenen Gehäuse angeordnet ist, das vorteilhaft klein ausgeführt sein kann. Außerdem ist mit dem Widerstandsthermometer unmittelbar die Temperatur des Substrats erfassbar, wodurch die Temperatur des Infrarotlichtsensors genau messbar ist. Die genaue Kenntnis der aktuellen Temperatur des Infrarotlichtsensors ermöglicht eine genaue Kalibrierung von Messungen mit dem Infrarotlichtsensor, so dass mit Hilfe des Widerstandsthermometers eine genaue Kalibrierung des Infrarotlichtsensors ermöglicht ist, wodurch der Infrarotlichtsensorchip eine hohe Messgenauigkeit hat.

Dadurch, dass die Widerstandsbahn aus dem Material der Basiselektrode hergestellt ist, ist vorteilhaft für die Herstellung der Widerstandsbahn des Widerstandsthermometers und der Basiselektrode lediglich ein einziger Herstellungsschritt notwendig. Somit ist eine einfache und kostengünstige Herstellung des Infrarotlichtsensorchips erzielt. Ferner kann in diesem Herstellungsschritt für die Widerstandsbahn und der Basiselektrode die Widerstandsbahn unmittelbar benachbart zur Basiselektrode in geringem Abstand angebracht werden, wodurch einerseits der Platzbedarf des Infrarotlichtsensorchips vorteilhaft gering ist und andererseits die von der Widerstandsbahn messbare Temperatur mit der aktuellen Temperatur des Infrarotlichtsensors gut übereinstimmt.

Bevorzugt ist das Material der Basiselektrode Platin. Die Widerstandsbahn und die Basiselektrode sind bevorzugt gleich dick. Hierbei sind die Stärken der Widerstandsbahn und der Basiselektrode senkrecht zur Oberfläche derjenigen Seite des Substrats zu nehmen, auf der sowohl die Widerstandsbahn als auch die Basiselektrode angebracht sind. Ferner ist die Widerstandsbahn bevorzugt mäanderförmig ausgebildet. Bei den üblichen Randbedingungen für den Infrarotlichtsensorchip ist in der Regel die Breite der Basiselektrode für die erforderliche Länge der Widerstandsbahn zu gering, insbesondere wenn das Material der Basiselektrode und der Widerstandsbahn Platin und die Basiselektrode und die Widerstandsbahn gleich dick sein sollen. Dadurch, dass bevorzugt die Widerstandsbahn mäanderförmig ausgebildet ist, ist die Länge der Widerstandsbahn entsprechend zu wählen, ohne dabei einen Platzbedarf zu erzeugen, der über die Breite der Basiselektrode hinausgeht.

Das Widerstandsthermometer weist an den Längsenden der Widerstandsbahn jeweils eine Widerstandselektrode zum elektronischen Abgreifen des aktuellen elektrischen Widerstands der Widerstandsbahn auf. Das Widerstandsthermometer ist via die Widerstandselektroden betreibbar, beispielsweise mit einer Wheatstone'schen Messbrücke.

Ferner ist es bevorzugt, dass das Substrat einen Rahmen und eine Membran aufweist, die von dem Rahmen aufgespannt ist, wobei der Infrarotlichtsensor mit seiner Basiselektrode auf der Membran und das Widerstandsthermometer mit seiner Widerstandsbahn auf dem Rahmen angeordnet sind. Der Rahmen ist hierbei an der Stelle, an der das Widerstandsthermometer angeordnet ist, bevorzugt breiter als an den anderen Stellen ausgebildet. Dadurch ist vorteilhaft das Widerstandsthermometer auf dem Rahmen des Substrats angeordnet, der ohnehin zum Halten der Membran vorgesehen ist. Somit braucht für das Widerstandsthermometer keine zusätzliche Abstützung vorgesehen zu werden, wodurch der Infrarotlichtsensorchip eine kompakte Bauweise hat. Bevorzugt ist lediglich der Rahmen an der Seite, an der das Widerstandsthermometer angeordnet ist, breiter als an den anderen Stellen ausgebildet, so dass für den bevorzugtermaßen mäanderförmigen Verlauf der Widerstandsbahn ausreichend Platz bereitgestellt ist.

Der Infarrotlichtsensor weist bevorzugt ein Sensorelement auf, das auf der Basiselektrode angeordnet und mit dieser elektrisch leitend verbunden ist. Das Material des Sensorelements ist bevorzugt Blei-Zirkonat-Titanat. Außerdem ist es bevorzugt, dass der Infrarotlichtsensorchip mit einem Dünnschichtverfahren hergestellt ist. Bevorzugtermaßen hat die Widerstandsbahn eine Dicke von 40 bis 100 nm und/oder eine Breite von 5 bis 10 µm und/oder einen elektrischen Widerstand von 1 kΩ bei Raumtemperatur.

Beim Herstellen des Infrarotlichtsensorchips wird zum Beschichten des Substrats bevorzugt das Basiselektrodenmaterial auf das Substrat aufgedampft. Zum Herstellen des Sensorelements ist es bevorzugt, dass die Basiselektrodenschicht mit dem Sensorelementmaterial beschichtet wird. Dabei ist es bevorzugt, dass zum Beschichten der Basiselektrodenschicht das Sensorelementmaterial auf die Basiselektrodenschicht mit einem Sputter-Verfahren aufgebracht wird.

Vorteilhaft ist beim erfindungsgemäßen Infrarotlichtsensorchip die Temperatur unmittelbar am Sensorelement messbar, wodurch die Kalibration und somit die Messgenauigkeit des Infrarotlichtsensorchips hoch ist. Bei einem herkömmlichen Sensorchip ist ein Temperatursensor beispielsweise außerhalb eines Gehäuses angeordnet, wobei der Temperatursensor als eine diskrete Komponente ausgeführt ist. Dadurch, dass beim erfindungsgemäßen Infrarotlichtsensorchip das Widerstandsthermometer mit seiner Widerstandsbahn unmittelbar auf dem Substrat angeordnet ist, ist das Widerstandsthermometer als ein in dem Infrarotlichtsensorchip integriertes Bauteil ausgeführt. Dadurch braucht beim erfindungsgemäßen Infrarotlichtsensorchip etwa eine zusätzliche Komponente für einen Temperatursensor, wie es bei dem herkömmlichen Infrarotlichtsensorchip notwendig ist, nicht vorgesehen zu werden, wodurch sowohl der Herstellungsaufwand und somit die Herstellungskosten als auch die Baugröße des erfindungsgemäßen Infrarotlichtsensorchips verglichen mit dem herkömmlichen Infrarotlichtsensorchip gering sind.

Beim herkömmlichen Infrarotlichtsensorchip ist der diskrete Temperatursensor häufig auf der Unterseite einer Leiterplatte angebracht, wobei dieser Temperatursensor in der Regel das einzige Bauteil auf der Unterseite ist. Beim Assembly-Prozess beispielsweise in einem Reflow-Ofen ist es daher erforderlich, dass der Temperatursensor thermisch geschützt wird. Die dafür notwendigen Maßnahmen sind aufwändig und mit zusätzlichen Herstellungskosten verbunden. Vorteilhaft sind derartige Maßnahmen beim Herstellen des erfindungsgemäßen Infrarotlichtsensorchips nicht notwendig. Ferner ist der Integrationsprozess des Widerstandsthermometers mit dem Prozess zum Herstellen des pyroelektrischen Infrarotlichtsensors kompatibel und kann daher auf Wafer-Ebene direkt durchgeführt werden, wodurch sich für das erfindungsgemäße Verfahren zum Herstellen des Infrarotlichtsensorchips ein Kostenvorteil ergibt.

Im Folgenden wird ein bevorzugtes Ausführungsbeispiel eines erfindungsgemäßen Infrarotlichtsensorchips anhand der beigefügten schematischen Zeichnungen erläutert. Es zeigen:
Figur 1 eine Draufsicht einer schematischen Darstellung des erfindungsgemäßen Infrarotlichtsensorchips und
Figur 2 eine Darstellung des Schnitts A-A aus Figur 1.

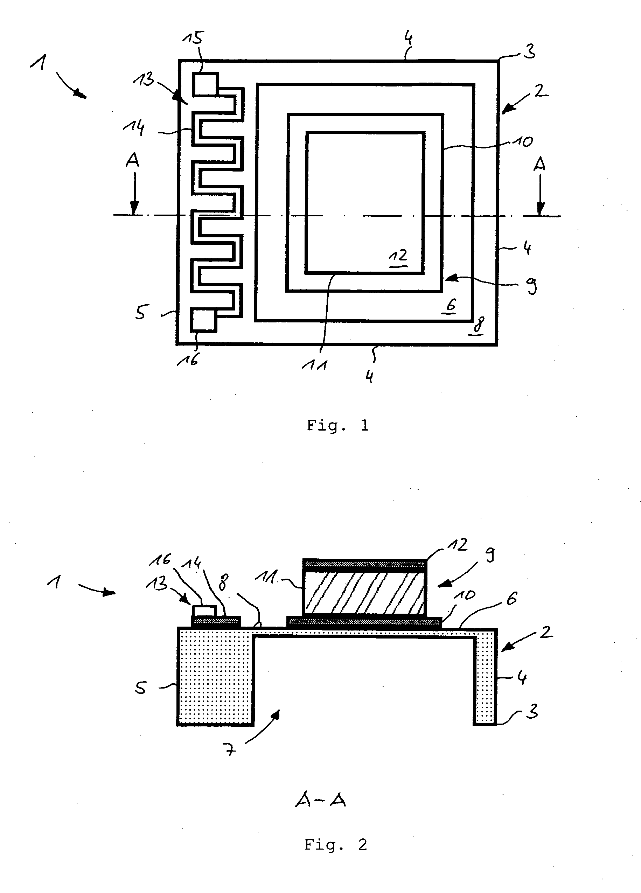

Wie es aus Figuren 1 und 2 ersichtlich ist, weist ein Infrarotlichtsensorchip 1 ein Substrat 2 auf, das von einem Rahmen 3 gebildet ist. Der Rahmen 3 hat einen rechteckigen Grundriss, wobei eine Seite des Rahmens 3 von einem schmalen Rahmenabschnitt 4 und die anderen drei Seiten des Rahmens 3 von breiten Rahmenabschnitten 5 gebildet sind. Von dem Rahmens 3 wird eine Membran 6 aufgespannt, die an der Oberseite 8 des Rahmens 3 angeordnet ist. Der Rahmen 3 ist bevorzugt aus Silizium und die Membran 6 ist bevorzugt aus Siliziumoxid und/oder Siliziumnitrid hergestellt, wobei aus einem Siliziumwafer mit einer Beschichtung aus Siliziumoxid und/oder Siliziumnitrid eine Membranaussparung 7 derart abgetragen wird, dass der Rahmen 3 mit der Membran 6 ausgebildet werden.

Der Rahmen 3 und die Membran 6 bilden an der Substratoberseite 8 eine plane Fläche, wobei mittig auf der Membran 6 ein Infrarotlichtsensor 9 angeordnet ist. Der Infrarotlichtsensor 9 und die Membran 6 sind derart in ihren Grundrissen dimensioniert, dass der Infrarotlichtsensor 9 im Grundriss innerhalb des Rahmens 3 und somit von der Membran 6 vollständig umringt angeordnet ist.

Der Infrarotlichtsensor 9 weist eine Basiselektrode 10 auf, die unmittelbar auf der Substratoberseite 8 angebracht ist. Auf der Basiselektrode 10 ist ein Sensorelement 11 angeordnet, das aus Blei-Zirkonat-Titanat hergestellt ist. Im Grundriss ist das Sensorelement 11 etwas kleiner als die Basiselektrode 10 dimensioniert, so dass die Basiselektrode 10 von dem Sensorelement 11 auf der Substratoberseite 8 etwas vorsteht. Auf dem Sensorelement 11 ist eine Kopfelektrode 12 angeordnet, die im Grundriss mit dem Sensorelement 11 deckungsgleich ist. Das Sensorelement 11 ist sowohl mit der Basiselektrode 10 als auch mit der Kopfelektrode 12 elektrisch leitend verbunden, so dass Ladungsverschiebungen hervorgerufen durch eine Infrarotlichtbestrahlung des Infrarotlichtsensors 9 abgreifbar sind.

Auf der Substratoberseite 8 ist auf dem breiten Randabschnitt 5 ein Widerstandsthermometer 13 integriert angebracht. Das Widerstandsthermometer 13 weist eine Widerstandsbahn 14 auf, die entlang des breiten Rahmenabschnitts 5 und parallel zur zugewandten Seite der Basiselektrode 10 mäanderförmig verläuft. An den Längsenden der Widerstandsbahn 14 ist jeweils eine Widerstandselektrode 15, 16 angebracht.

Die Basiselektrode 10 und die Widerstandsbahn 14 sind aus Platin und gleich dick. Die Länge der Widerstandsbahn 14 ist derart dimensioniert, dass das Widerstandsthermometer 13 einen elektrischen Widerstand von 1 kΩ hat. Die Dicke der Widerstandsbahn 14 ist zwischen 400 und 100 nm und ihre Breite zwischen 5 bis 10 µm. Die Widerstandsbahn 14 ist unmittelbar benachbart und mit geringem Abstand zur Basiselektrode 10 angeordnet, auf der das Sensorelement 11 angeordnet ist. Der Wärmepfad von dem Sensorelement 11 zu der Widerstandsbahn 14 verläuft von dem Sensorelement 11 via die Basiselektrode 10, die Membran 6 und den breiten Rahmenabschnitt 5 zur Widerstandsbahn 14. Der Wärmeleitungspfad ist derart kurz ausgebildet, dass sich die Temperatur der Widerstandsbahn 14 beim Betrieb des Infrarotlichtsensorchips nur unwesentlich von der Temperatur des Sensorelements 11 unterscheidet. Wird beispielsweise durch Anlegen einer Wheatstone'schen Messbrücke an die Widerstandselektroden 15, 16 der elektrische Widerstand der Widerstandsbahn 14 gemessen, so ist ein genauer Rückschluss auf die aktuelle Temperatur des Sensorelements 11 ermöglicht. Beim Betrieb des Infrarotlichtsensorchips ist es für Kalibrationszwecke wichtig, die aktuelle Temperatur des Sensorelements 11 möglichst genau zu kennen. Dadurch, dass mit dem erfindungsgemäß auf dem Substrat 2 vorgesehenen Widerstandsthermometer 13 die aktuelle Temperatur des Sensorelements 11 sehr genau bestimmbar ist, ist die Messgenauigkeit des Infrarotlichtsensorchips 1 hoch.

Zum Herstellen des Infrarotlichtsensorchips ist das Substrat 2 bereitzustellen, das den Rahmen 3 und die Membran 6 aufweist. Die Membran 6 und der Rahmen 3 sind an der Substratoberseite 8 bündig ausgebildet. Zum Herstellen der Basiselektrode 10 und der Widerstandsbahn 14 ist das Substrat 2 an der Substratoberseite 8 mit Platin zu beschichten, so dass die Substratoberseite 8 mit dem Platin bedeckt wird, wodurch auf der Substratoberseite 8 eine Platinschicht ausgebildet wird. Die Platinschicht wird auf der Oberseite 8 mit einem Aufdampfverfahren hergestellt.

Auf die Platinschicht ist mit einem Sputter-Verfahren eine Blei-Zirkonat-TitanatSchicht und auf diese wiederum eine weitere Platinschicht zum Ausbilden der Kopfelektrode 12 aufzubringen. Durch Ätzen wird überschüssiges Material auf dem Substrat 2 entfernt, so dass von der ersten, unmittelbar auf dem Substrat 2 angeordneten Platinschicht die Widerstandsbahn 14 und die Basiselektrode 10 ausgebildet werden. Somit werden die Widerstandsbahn 14 und die Basiselektrode 10 beim Aufdampfen der ersten Platinschicht und beim Entfernen des überschüssigen Materials jeweils in einem einzigen Verfahrensschritt hergestellt, wodurch das Verfahren zum Herstellen des Infrarotlichtsensorchips 1 einfach und kostengünstig ist. Ferner wird aus der Blei-Zirkonat-TitanatSchicht das Sensorelement 11 und aus der auf der Blei-Zirkonat-Titanat-Schicht angeordneten zweiten Platinschicht die Kopfelektrode 12 ausgebildet.

### Bezugszeichenliste

- 1: Infrarotlichtsensorchip
- 2: Substrat
- 3: Rahmen
- 4: schmaler Rahmenabschnitt
- 5: breiter Rahmenabschnitt
- 6: Membran
- 7: Membranaussparung
- 8: Substratoberseite
- 9: Infrarotlichtsensor
- 10: Basiselektrode
- 11: Sensorelement
- 12: Kopfelektrode
- 13: Widerstandsthermometer
- 14: Widerstandsbahn
- 15: erste Widerstandselektrode
- 16: zweite Widerstandselektrode

## Patentansprüche

1. Infrarotlichtsensorchip mit einem Substrat (2), einem Infrarotlichtsensor (9), der eine Basiselektrode (10) aufweist, die an einer Seite (8) des Substrats (2) unmittelbar anliegt und mittels der der Infrarotlichtsensor (9) an dem Substrat (2) befestigt ist, und einem Widerstandsthermometer (13), das eine Widerstandsbahn (14) aufweist, die unmittelbar an der Seite (8) des Substrats (2) neben dem Infrarotlichtsensor (9) anliegt und für eine Messung der Temperatur des Substrats (2) durch das Widerstandsthermometer (13) eingerichtet ist, wobei die Widerstandsbahn (14) aus dem Material der Basiselektrode (10) hergestellt ist.

2. Infrarotlichtsensorchip gemäß Anspruch 1, wobei das Material der Basiselektrode (10) Platin ist.

3. Infrarotlichtsensorchip gemäß Anspruch 1 oder 2, wobei die Widerstandsbahn (14) und die Basiselektrode (10) gleich dick sind.

4. Infrarotlichtsensorchip gemäß einem der Ansprüche 1 und 3, wobei die Widerstandsbahn (14) mäanderförmig ausgebildet ist.

5. Infrarotlichtsensorchip gemäß einem der Ansprüche 1 bis 4, wobei das Widerstandsthermometer (13) an den Längsenden der Widerstandsbahn (14) jeweils eine Widerstandselektrode (15, 16) zum elektronischen Abgreifen des aktuellen elektrischen Widerstands der Widerstandsbahn (14) aufweist.

6. Infrarotlichtsensorchip gemäß einem der Ansprüche 1 bis 5, wobei das Substrat (2) einen Rahmen (3) und eine Membran (6) aufweist, die von dem Rahmen (3) aufgespannt ist, wobei der Infrarotlichtsensor (9) mit seiner Basiselektrode (10) auf der Membran (6) und das Widerstandsthermometer (13) mit seiner Widerstandsbahn (14) auf dem Rahmen (3) angeordnet sind.

7. Infrarotlichtsensorchip gemäß Anspruch 6, wobei der Rahmen (3) an der Stelle, an der das Widerstandsthermometer (13) angeordnet ist, breiter als an den anderen Stellen ausgebildet ist.

8. Infrarotlichtsensorchip gemäß einem der Ansprüche 1 bis 7, wobei der Infrarotlichtsensor (9) ein Sensorelement (11) aufweist, das auf der Basiselektrode (10) angeordnet und mit dieser elektrisch leitend verbunden ist.

9. Infrarotlichtsensorchip gemäß Anspruch 8, wobei das Material des Sensorelements (11) Blei-Zirkonat-Titanat ist.

10. Infrarotlichtsensorchip gemäß einem der Ansprüche 1 bis 9, wobei der Infrarotlichtsensorchip (1) mit einem Dünnschichtverfahren hergestellt ist.

11. Infrarotlichtsensorchip gemäß einem der Ansprüche 1 bis 10, wobei die Widerstandsbahn (14) eine Dicke von 40 bis 100 nm und/oder eine Breite von 5 bis 10 µm und/oder einen elektrischen Widerstand von 1 kΩ bei Raumtemperatur hat.

12. Verfahren zum Herstellen eines Infrarotlichtsensorchips (1) gemäß einem der Ansprüche 1 bis 11, mit den Schritten:
- Bereitstellen des Substrats (2);
- Beschichten des Substrats (2) an der Seite (8) mit dem Basiselektrodenmaterial, so dass die Seite (8) von einer Basiselektrodenmaterialschicht bedeckt wird;
- Entfernen von überschüssigem Material der Basiselektrodenmaterialschicht, so dass die Basiselektrode (10) und die Widerstandsbahn (14) an der Seite (8) des Substrats (2) ausgebildet werden;
- Fertigstellen des Infrarotlichtsensors (1).

13. Verfahren gemäß Anspruch 12, wobei zum Beschichten des Substrats (2) das Basiselektrodenmaterial auf das Substrat (2) aufgedampft wird.

14. Verfahren gemäß Anspruch 12 oder 13, mit dem Schritt:
Beschichten der Basiselektrodenschicht mit dem Sensorelementmaterial.

15. Verfahren gemäß Anspruch 14, wobei zum Beschichten der Basiselektrodenschicht das Sensorelementmaterial auf die Basiselektrodenschicht mit einem Sputter-Verfahren aufgebracht wird.

## Claims

1. Infrared light sensor chip with a substrate (2), an infrared light sensor (9) that comprises a base electrode (10) that lies immediately on a side (8) of the substrate (2) and by means which the infrared light sensor (9) is attached on the substrate (2), and a resistance thermometer (13) that comprises a resistance track (14) that lies immediately on the side (8) of the substrate (2) next to the infrared light sensor (9) and is adapted for a measurement of the temperature of the substrate (2) by means of the resistance thermometer (13), wherein the resistance track (14) is made out of the material of the base electrode (10).

2. Infrared light sensor chip according to claim 1, wherein the material of base electrode (10) is platinum.

3. Infrared light sensor chip according to claim 1 or 2, wherein the resistance track (14) and the base electrode (10) are equally thick.

4. Infrared light sensor chip according to any one of the Claims 1 and 3, wherein the resistance track (14) is formed in a meandering shape.

5. Infrared light sensor chip according to any one of the claims 1 to 4, wherein the resistance thermometer (13) comprises a respective resistance electrode (15, 16) on the longitudinal ends of the resistance track (14) for electronically tapping of the actual electrical resistance of the resistance track (14).

6. Infrared light sensor chip according to any one of the claims 1 to 5, wherein the substrate (2) comprises a frame (3) and membrane (6) that is spanned by the frame (3), wherein the infrared light sensor (9) with its base electrode (10) is arranged on the membrane (6) and the resistance thermometer (13) with its resistance track (14) is arranged on the frame (3).

7. Infrared light sensor chip according to claim 6, wherein the frame (3) is formed on the position, on which the resistance thermometer (13) is arranged, broader than at the other positions.

8. Infrared light sensor chip according to any one of the claims 1 to 7, wherein the infrared light sensor (9) comprises a sensor element (11) that is arranged on the base electrode (10) and connected electrically conductive with the base electrode (10).

9. Infrared light sensor chip according to claim 8, wherein the material of the sensor element (11) is lead-zrconate-titanate.

10. Infrared light sensor chip according to any one of the claims 1 to 9, wherein the infrared light sensor chip (1) is made by means of a thin layer method.

11. Infrared light sensor chip according to any one of the claims 1 to 10, wherein the resistance track (14) has a thickness from 40 to 100 nm, and/or a width from 5 to 10 µm, and/or an electrical resistance of 1 kΩ at room temperature.

12. Method for making an infrared light sensor chip (1) according to any one of the claims 1 to 11, with the steps:
- providing the substrate (2);
- coating the substrate (2) on the side (8) with the base electrode material, so that the side (8) is covered by a base electrode material layer;
- removing of surplus material of the base electrode material layer, so that the base electrode (10) and the resistance track (14) are formed on the side (6) of the substrate (2);
- finishing of the infrared light sensor (1).

13. Method according to claim 12, wherein for coating of the substrate (2) the base electrode material is vapour deposited on the substrate (2).

14. Method according to claim 12 or 13, with the step:
coating of the base electrode layer with the sensor element material.

15. Method according to claim 14, wherein for coating of the base electrode layer the sensor element material is deposited on the base electrode layer by means of a sputter-method.

## Revendications

1. Puce de détection de lumière infrarouge, comprenant un substrat (2), un capteur de lumière infrarouge (9) possédant une électrode de base (10) qui est en contact direct avec un côté (8) du substrat (2) et par l'intermédiaire de laquelle le capteur de lumière infrarouge (9) est fixé sur le substrat (2), et un thermomètre résistif (13) comportant une piste résistive (14), qui est en contact direct avec le côté (8) du substrat (2) adjacent au capteur de lumière infrarouge (9) et qui est configuré pour mesurer la température du substrat (2) par le thermomètre résistif (13), la piste résistive (14) étant faite du même matériau que l'électrode de base (10).

2. Puce de détection de lumière infrarouge selon la revendication 1, dans laquelle le matériau de l'électrode de base (10) est le platine.

3. Puce de détection de lumière infrarouge selon la revendication 1 ou la revendication 2, dans laquelle la piste résistive (14) et l'électrode de base (10) sont de même épaisseur.

4. Puce de détection de lumière infrarouge selon l'une quelconque des revendications 1 et 3, dans laquelle la piste résistive (14) est réalisée en forme de méandres.

5. Puce de détection de lumière infrarouge selon l'une quelconque des revendications 1 à 4, dans laquelle ledit thermomètre résistif (13) comprend une électrode réslstive (15, 16) respective au niveau de chacune des extrémités longitudinales de la piste résistive (14) pour capter électroniquement une résistance électrique de courant de la piste résistive (14).

6. Puce de détection de lumière infrarouge selon l'une quelconque des revendications 1 à 5, dans laquelle le substrat (2) présente un châssis (3) et une membrane (6), laquelle est maintenue par le châssis (3), le capteur de lumière infrarouge (9) ayant son électrode de base (10) disposée sur la membrane (6) et le thermomètre résistif (13) ayant sa piste résistive (14) disposée sur le châssis (3).

7. Puce de détection de lumière infrarouge selon la revendication 6, dans laquelle le châssis (3) est aménagé de façon à être plus large au niveau du point dans lequel le thermomètre résistif (13) est disposé, qu'au niveau des autres points.

8. Puce de détection de lumière infrarouge selon l'une quelconque des revendications 1 à 7, dans laquelle le capteur de lumière infrarouge (9) comprend un élément formant capteur (11) qui se trouve sur l'électrode de base (10) et qui est relié à celle-ci d'une façon conductrice de l'électricité.

9. Puce de détection de lumière infrarouge selon la revendication 8, dans laquelle le matériau de l'élément formant capteur (11) est du titanate zirconite de plomb.

10. Puce de détection de lumière infrarouge selon l'une quelconque des revendications 1 à 9, dans laquelle la puce de détection de lumière infrarouge (1) est réalisée selon un procédé à couches minces.

11. Puce de détection de lumière infrarouge selon l'une quelconque des revendications 1 à 10, dans laquelle la piste résistive (14) a une épaisseur de 40 à 100 nm et / ou une largeur de 5 à 10 µm et / ou une résistance électrique de 1 kΩ à température ambiante.

12. Procédé de production d'une puce de détection de lumière infrarouge (1) selon l'une quelconque des revendications 1 à 11, comprenant les étapes consistant à :
- fournir le substrat (2) ;
- revêtir le substrat (2) sur le côté (8) ayant le matériau d'électrode de base, de sorte que le côté (8) est recouvert par une couche de matériau d'électrode de base ;
- retirer la matière en excès de fa couche de matériau d'électrode de base de sorte que l'électrode de base (10) et la piste résistive (14) sont formées sur le côté (8) du substrat (2) ;
- compléter la fabrication du détecteur de lumière infrarouge (1).

13. Procédé selon la revendication 12, dans lequel, pour le revêtement du substrat (2), le matériau d'électrode de base est déposé en phase vapeur sur le substrat (2).

14. Procédé selon la revendication 12 ou la revendication 13, comprenant l'étape consistant à : recouvrir la couche d'électrode de base avec le matériau de l'élément formant capteur.

15. Procédé selon la revendication 14, dans lequel, pour le revêtement de la couche d'électrode de base, le matériau de l'élément formant capteur est appliqué sur la couche d'électrode de base avec un procédé de pulvérisation catholique.
